# EUROPEAN PATENT APPLICATION

(11) **EP 2 899 783 A1**
(43) Date of publication of application: **29.07.2015**
(21) Application number: 13838268.4
(22) Date of filing: 18.09.2013
(51) Int. Cl.: H01M 4/66, H01G 11/66

(54) **CURRENT COLLECTOR, ELECTRODE STRUCTURE, AND ELECTRICITY STORAGE COMPONENT**

(30) Priority: 21.09.2012 JP 2012207814
(71) Applicant: UACJ Corporation, Tokyo 100-0004 (JP); UACJ Foil Corporation, Chuo-ku Tokyo 1030026 (JP); Furukawa Electric Co., Ltd., Chiyoda-ku Tokyo 100-8322 (JP)
(72) Inventor: SAITO, Sohei, Tokyo 1000004 (JP); KATO, Osamu, Tokyo 1000004 (JP); HONKAWA, Yukiou, Tokyo 1000004 (JP); YAEGASHI, Tatsuhiro, Tokyo 1000004 (JP); KATAOKA, Tsugio, Kusatsu-shi, Shiga 525-0042 (JP); INOUE, Mitsuya, Kusatsu-shi, Shiga 525-0042 (JP); YAMABE, Satoshi, Kusatsu-shi, Shiga 525-0042 (JP); MORISHIMA, Yasumasa, Tokyo 100-8322 (JP); ITO, Takayori, Tokyo 100-8322 (JP); HARA, Hidekazu, Tokyo 100-8322 (JP); IIDA, Takahiro, Tokyo 100-8322 (JP)
(74) Representative: Gulde & Partner
(86) International application number: PCT/JP2013/075120
(87) International publication number: WO 2014/046112

(57) **Abstract**

Provided is a current collector which can secure safety by certainly exhibiting the PTC function when used for an electrode structure of an electrical storage device such as non-aqueous electrolyte batteries, electrical double layer capacitors, lithium ion capacitors, and the like. Here, the current collector shall also be capable of being used for high-speed charge/discharge, having long life, being high in safety, and having excellent productivity. According to the present invention, a current collector 1 including a substrate 3, and a resin layer 5 formed on at least one side of the substrate 3, the resin layer 5 having conductivity, is provided. The current collector 1 satisfies the following conditions of: (1) a degree of swelling of the resin layer 5 with a non-aqueous electrolyte solution is 1% or more and 1000% or less at a PTC realization temperature, and (2) the PTC realization temperature is in the range from 65°C to 200°C.

## Description

### TECHNICAL FIELD

The present invention relates to current collectors, electrode structures, and electrical storage devices (including non-aqueous electrolyte batteries, electrical double layer capacitors, lithium ion capacitors, and the like).

### BACKGROUND

Regarding lithium ion batteries used in vehicles and the like, high-speed charge/discharge characteristics (high rate characteristics) are required during usual usage, and a so-called shut down function (PTC function) to terminate charge/discharge automatically and safely when an accident such as malfunction occurs is required. For the high rate characteristics, a technique to minimize the grain size of the active material and a technique to form a conductive layer on the current collector have been known. On the other hand, for the PTC function to improve the safety of batteries, a technique to prevent increase in the internal pressure by using a safety valve, and a technique to install a PTC (Positive Temperature Coefficient) element which shows higher resistance when the temperature rise, thereby cutting off the current for exothermic circumstances, have been known. Regarding the PTC function of batteries, separators have been provided for achieving such functions. The separator is designed so that the separator fuses to block micropores in the temperature range of 110 to 140°C, thereby blocking the passage of Li ions, leading to termination of electrode reaction when the battery is over-heated. However, there are cases where the shut down by the separator is incomplete and thus the temperature further rises exceeding the melting point of the separator or where the external temperature rises. In such cases, the separator may melt down and result in internal short-circuit. Then, the shut down function can no longer be counted on, and the battery would be in a condition called the thermal runaway.

Accordingly, a technique to provide charge/discharge characteristics during usual usage and to improve safety when an accident such as malfunction occurs, is suggested. For example, Patent Literature 1 discloses the usage of polyvinylidene difluoride for the conductive layer, the polyvinylidene difluoride having a fusion temperature of 130°C or higher and lower than 155°C, and a mass ratio of α-crystal and β-crystal (α/β) in the range of 0.35 to 0.56, thereby increasing resistance at elevated temperatures.

Patent Literature 2 discloses the usage of a conductive layer including polyolefin-based crystalline thermoplastics having a melting temperature in the range of 100°C to 120°C, thereby achieving a resistance of 100 ΩCm or higher at elevated temperatures.

### CITATION LIST

### PATENT LITERATURE

Patent Literature 1: JP 2012-104422A
Patent Literature 2: JP 2001-357854A

### SUMMARY OF THE INVENTION

### TECHNICAL PROBLEM

However, the afore-mentioned conventional techniques had room for improvement in view of the following points, and thus still had problems in providing secure safety.

First of all, regarding the technique of Patent Literature 1, the effect depends on the crystal condition of the resin used in the conductive layer. The crystal condition varies by the heating temperature during the active material layer coating process and the heat history of the electrode during the drying process for removing moisture, and thus there are cases where the resistance does not increase sufficiently.

Secondly, regarding the technique of Patent Literature 2, the so-called high rate characteristics of the high-speed charge/discharge characteristics were not sufficient, and thus it was not suitable for the high-speed charge/discharge at usual usage. In addition, since the resin used is a thermoplastic resin, the electrode layer would expand when the temperature reaches 100°C or higher during the active material coating process. Therefore, the resistance would increase regardless of the existence of the electrolyte solution. Accordingly, since the condition of the resin would differ if the resin fuses, the temperature during manufacture need be kept at lower than 100°C, resulting in extremely low productivity.

The present invention has been made by taking the afore-mentioned circumstances into consideration. An object of the present invention is to provide a current collector which can secure safety by certainly exhibiting the PTC function when used for the electrode structure of the electrical storage device such as non-aqueous electrolyte batteries, electrical double layer capacitors, lithium ion capacitors, and the like. Here, the current collector shall also be capable of being used for high-speed charge/discharge, having long life, being high in safety, and having excellent productivity.

### SOLUTION TO PROBLEM

According to the present invention, a current collector, comprising: a substrate; and a resin layer formed on at least one side of the substrate, the resin layer having conductivity; wherein the resin layer comprises a resin and a conductive material; and the resin layer satisfies the following conditions of: (1) a degree of swelling of the resin layer with a non-aqueous electrolyte solution is 1% or more and 1000% or less at a PTC exhibiting temperature, and (2) the PTC exhibiting temperature is in the range of 65°C to 200°C; when the current collector is immersed in the non-aqueous electrolyte solution and the temperature is raised with a speed of 5°C/min to obtain a temperature-resistance curve of the current collector; temperature Ta is defined as a temperature at which resistance R_{T} at temperature T and resistance R(_{T-10}) at temperature T-10°C satisfies a relation of (R_{(T)}/R_{(T-10)})>1.5; temperature Tb is defined as a temperature above Ta which first satisfies a relation of (R(_{T})/R_{(T-10)})<1.5; a straight line is obtained with values of resistance in a range from R_{Ta} at Ta and R_{(Tb-10)} at 10°C lower than Tb using a least squares method, and another straight line is obtained with values of resistance in a range from 25°C to 40°C using a least squares method; and a point where the two straight lines cross is defined as the PTC exhibiting temperature, is provided.

According to such structure, a current collector which can secure safety by certainly exhibiting the PTC function when used for the electrode structure of the electrical storage device such as non-aqueous electrolyte batteries, electrical double layer capacitors, lithium ion capacitors, and the like, can be provided. Here, the current collector is also capable of being used for high-speed charge/discharge, having long life, being high in safety, and having excellent productivity.

In addition, according to the present invention, an electrode structure, comprising: the afore-mentioned current collector; and an active material layer or an electrode material layer formed on the resin layer of the current collector, is provided.

According to such structure, an electrode structure which can secure safety by certainly exhibiting the PTC function when used for the electrical storage device such as non-aqueous electrolyte batteries, electrical double layer capacitors, lithium ion capacitors, and the like, can be provided, since the electrode structure uses the afore-mentioned current collector. Here, the electrode structure is also capable of being used for high-speed charge/discharge, having long life, being high in safety, and having excellent productivity.

In addition, according to the present invention, an electrical storage device comprising the afore-mentioned electrode structure, is provided.

According to such structure, an electrical storage device which can secure safety by certainly exhibiting the PTC function can be provided, since the electrical storage device uses the afore-mentioned electrode structure. Here, the electrical storage device such as non-aqueous electrolyte batteries, electrical double layer capacitors, lithium ion capacitors, and the like, is also capable of being used for high-speed charge/discharge, having long life, being high in safety, and having excellent productivity.

### EFFECT OF THE INVENTION

According to the present invention, a current collector which can secure safety by certainly exhibiting the PTC function when used for the electrode structure of the electrical storage device such as non-aqueous electrolyte batteries, electrical double layer capacitors, lithium ion capacitors, and the like, can be provided. Here, the current collector is also capable of being used for high-speed charge/discharge, having long life, being high in safety, and having excellent productivity.

### BRIEF DESCRIPTION OF THE DRAWINGS

[FIG. 1] FIG. 1 is a cross-sectional view showing a structure of the current collector according to one embodiment of the present invention.
[FIG. 2] FIG. 2 is a cross-sectional view showing a structure of an electrode structure constructed by using the current collector according to one embodiment of the present invention.
[FIG. 3] FIG. 3 is a schematic view for explaining the method for obtaining temperature Ta and temperature Tb of the current collector according to one embodiment of the present invention.
[FIG. 4] FIG. 4 is a schematic view for explaining the method for obtaining the PTC exhibiting temperature of the current collector according to one embodiment of the present invention.

### DESCRIPTION OF EMBODIMENTS

Hereinafter, the embodiments of the present invention will be described with reference to the drawings. Here, in all of the drawings, the same symbols are provided for the similar constitutional elements, and the explanations for them are omitted where applicable.

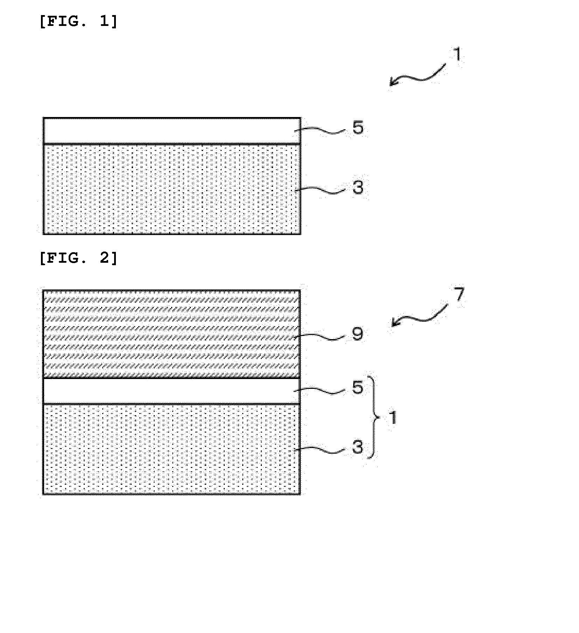

FIG. 1 is a cross-sectional view showing a structure of the current collector according to the present embodiment. As shown in FIG. 1, the current collector 1 of the present embodiment is structured by providing a resin layer 5 having conductivity on at least one side of a conductive substrate 3.

FIG. 2 is a cross-sectional view showing a structure of an electrode structure constructed by using the current collector of the present embodiment. As shown in FIG. 2, by forming an active material layer or an electrode material layer 9 on the resin layer 5 of the current collector 1 of the present embodiment, an electrode structure 7 suitable for the non-aqueous electrolyte batteries such as lithium ion batteries, electrical double layer capacitors, or lithium ion capacitors, can be structured.

The resin layer 5 of the current collector 1 of the present embodiment contains a resin and a conductive material. During usual usage, the conductive materials are in contact with each other to form a conductive pathway which penetrates through the resin layer 5, thereby allowing current to flow. The resin layer 5 of the present embodiment exhibits the PTC function when an accident occurs. When the volume of the resin layer expands by swelling, the distance between the conductive materials in the resin layer expands (density of the conductive fine particles in the resin layer decreases), thereby increasing resistance to exhibit the PTC function.

### (1. PTC Function)

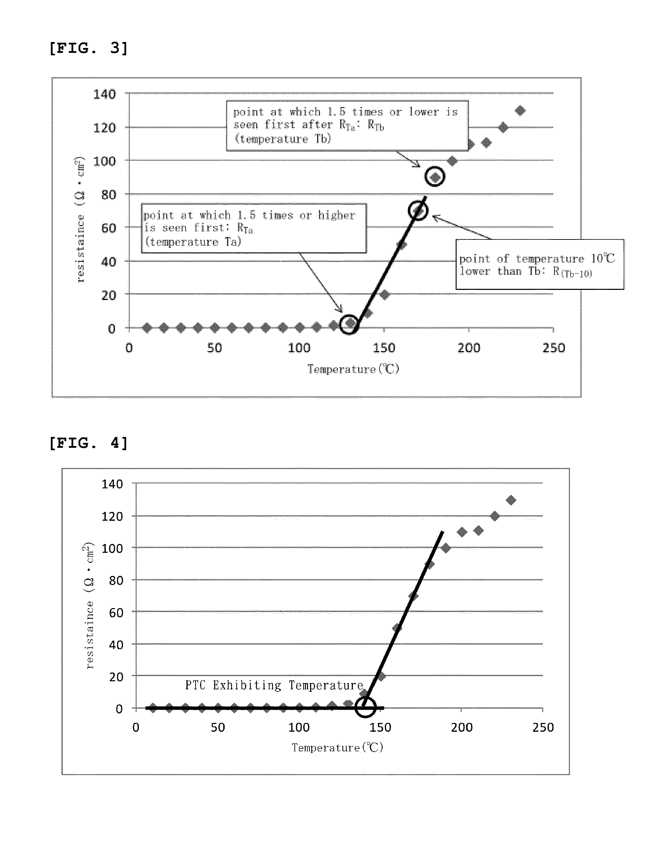

In the present invention, the resin layer of the current collector has an optimized PTC function in terms of the PTC exhibiting temperature. Here, the PTC exhibiting temperature will be explained with reference to FIG. 3 and FIG. 4. First, FIG. 3 is a schematic view for explaining the method for obtaining temperature Ta and temperature Tb of the current collector of the present embodiment. A temperature-resistance curve of FIG. 3 is obtained by immersing the resin layer 5 in the non-aqueous electrolyte solution and raising the temperature at a speed of 5°C/min. Here, Ta is defined as the temperature at which the resistance R_{T} at temperature T and the resistance R_{(T-10)} at temperature T-10°C satisfies the relation of (R_{(T)}/R_{(T-10})>1.5. Here, Tb is defined as the temperature above Ta which first satisfies the relation of (R_{(T)}/R_{(T-10)})<1.5.

FIG. 4 is a schematic view for explaining the method for obtaining the PTC exhibiting temperature of the current collector of the present embodiment. As shown in FIG. 4, a straight line is obtained with the values of resistance in the range from R_{Ta} at Ta to R_{(Tb-10)} at 10°C lower than Tb using the least squares method, and another straight line is obtained with the values of resistance in the range from 25°C to 40°C using the least squares method. The point where the two straight lines cross (the intersection point of the two straight lines marked with a circle in FIG. 4) is defined as the PTC exhibiting temperature of the present invention.

In the present embodiment, the graph of temperature (°C)-resistance (Ω·cm²) is used to obtain the PTC exhibiting temperature by the following procedures.

Resistance R at temperature T was defined as R_{T}, and resistance R at temperature T-10°C was defined as R(_{T-10}).
(1): The temperature at the point where R_{T} exceeded 1.5 times of R_{(T-10)} was defined as Ta.
(2): Then, the temperature at the point where R_{T} became less than 1.5 times of R_{(T-10)} was defined as Tb. The temperature 10°C lower than Tb was defined as Tb-10.
(3): A straight line was drawn using the least squares method, in the range provided by the two points of (1) and (2) .
(4): A straight line was drawn with the resistance values in the temperature range of 25°C to 40°C, using the least squares method.
(5): The point where the straight lines of (3) and (4) cross was defined as PTC exhibiting temperature.

Here, the current collector of the present embodiment satisfies the following two conditions.
(1) At the PTC exhibiting temperature, the degree of swelling of the resin layer by the non-aqueous electrolyte solution is 1% or more and 1000% or less.
(2) The PTC exhibiting temperature is in the range from 65°C to 200°C.

As shown in the following Examples, when these two conditions are satisfied, the decrease in conductivity can be suppressed to minimum during usual usage, and the current collector can swell with the non-aqueous electrolyte solution in appropriate temperature range at elevated temperatures to exhibit PTC function, thereby providing a current collector with high safety which can raise its internal resistance rapidly by the PTC function. That is, a current collector which can secure safety by certainly exhibiting the PTC function when used for the electrode structure of the electrical storage device such as non-aqueous electrolyte batteries, electrical double layer capacitors, lithium ion capacitors, and the like, can be provided. Here, the current collector is also capable of being used for high-speed charge/discharge, having long life, and having excellent productivity.

PTC function is a positive temperature characteristic, and in the present embodiment, a function to increase the resistance in accordance with the increase in temperature is included. As the internal resistance of a battery, resistance of the current collector 1, resistance of the resin layer 5, resistance of the active material layer, resistance of the electrolyte solution, and the resistance at the interface thereof can be mainly mentioned. Here, in order to realize the PTC function of the present embodiment, at least one of these resistances need be raised at elevated temperatures. In a case where the resin in the resin layer 5 swelled by 1% or more at elevated temperature, the volume of the resin in the resin layer increases, and thus the density of the conductive material in the resin layer decreases compared with that in the usual conditions. Accordingly, the resistance in the resin layer can be raised. In addition, when the resin layer 5 swells with the non-aqueous electrolyte solution when the temperature is raised, the amount of the electrolyte solution in the battery would decrease, making the movement of the ions in the electrolyte solution difficult. Accordingly, the resistance can be raised. However, when the degree of swelling exceeds 1000%, there is a possibility that the resin layer is partially dissolved in the electrolyte solution. Partial dissolution may achieve overall increase in the resistance, however, the portion of dissolution would allow current to flow, thereby causing current concentration. This current concentration would lead to further heat generation, resulting in cases where the shut down function cannot be realized. The degree of swelling of the resin can be in the range of two values selected from the group consisting of 1, 2, 3, 5, 10, 20, 30, 40, 50, 100, 200, 400, 600, 800, and 1000%.

In the present embodiment, it is preferable that the PTC exhibiting temperature is 65°C or higher and 200°C or lower. When the PTC exhibiting temperature is lower than 65°C, the high rate characteristics may be degraded since such temperature can be reached even in the usual usage conditions of the battery. Accordingly, it is not preferable since it can cause difficulty in its usage. On the other hand, when the PTC exhibiting temperature exceeds 200°C, thermal runaway would occur when the battery is used at temperatures exceeding 200°C. This is since the heat generation from the other components such as the negative electrode active material, electrolyte solution, and other materials would occur before the PTC function can be exhibited. Accordingly, the battery cannot be shut down appropriately. The PTC exhibiting temperature can be in the range of two values selected from the group consisting of 65, 70, 80, 90, 100, 110, 120, 130, 140, 150, 160, 170, 180, 190, and 200°C.

It is preferable that the resistance of the resin forming the afore-mentioned resin layer 5 swelled with the non-aqueous electrolyte solution at the temperature 20°C higher than the PTC exhibiting temperature is 2 times or more of the resistance at the PTC exhibiting temperature. When the resistance of the current collector 1 swelled with the non-aqueous electrolyte solution at the temperature 20°C higher than the PTC exhibiting temperature is 2 times or more of the resistance at the PTC exhibiting temperature, the PTC function can be exhibited most efficiently and securely, thereby allowing the desirable shut down of the battery. It can be said that the PTC function is exhibited, even with a case where the resistance gradually rises in the temperature range above the PTC exhibiting temperature. However, if the resistance increase is gradual as such, there are cases where the resistance increase cannot shut down the battery appropriately. Here, if the resistance at the temperature 20°C higher than the PTC exhibiting temperature is 2 times or more of the resistance at the PTC exhibiting temperature, the battery can be shut down appropriately. The battery can be shut down more appropriately if the resistance at the temperature 20°C higher than the PTC exhibiting temperature is 3, 5, 10, 20, 40, 60, 80, 100, 200, 400, 600, 800, or 1000 times or more of the resistance at the PTC exhibiting temperature.

### (2. Substrate)

As the substrate 3 of the present embodiment, conductive substrate of various metal foils for non-aqueous electrolyte batteries, electrical double layer capacitors, or lithium ion capacitors, can be used. Specifically, various metal foils for the positive electrode and negative electrode can be used, such as foils of aluminum, aluminum alloy, copper, stainless steel, nickel and the like. Among these, foils of aluminum, aluminum alloy, and copper are preferable in terms of the balance between conductivity and cost. There is no particular limitation regarding the thickness of the substrate 3. Here, it is preferably 5µm or more and 50µm or less. When the thickness is less than 5µm, the strength of the foil would be insufficient, thereby resulting in cases where formation of the resin layer becomes difficult. On the other hand, when the thickness exceeds 50µm, other constituents, especially the active material layer or the electrode layer need be made thin to compensate with the thickness of the substrate. Particularly in cases where an electrical storage device of non-aqueous electrolyte batteries, electrical double layer capacitors, or lithium ion capacitors are made, the thickness of the active layer need be made thin, thereby resulting in cases where sufficient capacity cannot be obtained.

### (3. Resin Layer)

In the present embodiment, the resin layer 5 added with a conductive material 11 is formed on the substrate 3. When the resin layer 5 of the present embodiment is used as the positive electrode, it can be structured as a layer for providing conductivity with the PTC function. Particularly, it is preferable that the resin layer is structured separately from the active material layer, so as to retain the shut down function and the high rate characteristics as well as efficiently realizing the PTC function. That is, the resin layer can improve adhesion of the conductive substrate 3 and the active material layer 9, provide shut down function and excellent high-speed charge/discharge characteristics, and can be suitably used for non-aqueous electrolyte batteries and electrical storage devices with excellent safety.

### (3-1. Resin)

The resin used for the resin layer 5 of the present embodiment preferably includes at least one type selected from the group consisting of a fluorine-based resin, a polyether-based compound, an acryl-based resin, a cellulose-based resin, and a Poval-based resin.

The PTC function of the present invention can be further certainly realized by including at least one type selected from the afore-mentioned resin group. That is, the resin layer can contribute to the realization of the high rate characteristics while maintaining excellent conductivity during usual usage, and can swell with the non-aqueous electrolyte solution when the internal temperature of the battery rises. Accordingly, the PTC function can be realized in the case of abnormal temperature increase and thus the internal resistance can be raised rapidly.

### (3-1-1. Fluorine-based Resin)

The fluorine-based resin used in the present embodiment is a resin containing fluorine, and fluorinated resins such as polyvinylidene difluoride (PVDF), polytetrafluoroethylene (PTFE), tetrafluoroethylene-perfluoroalkyl vinyl ether copolymer (PFA), tetrafluoroethylene-hexafluoropropylene copolymer (FEP), polychlorotrifluoroethylene (PCTFE), tetrafluoroethylene-ethylene copolymer (ETFE), chlorotrifluoroethylene-ethylene copolymer (ECTFE), polyvinyl fluoride (PVF) and the like and derivatives thereof; and fluorine copolymers obtained by copolymerizing fluoro olefins such as PCTFE and tetrafluoroethylene with cyclohexylvinylether or carboxylic acid vinyl ester; can be mentioned for example. Here, these resins can be used alone or two or more types can be used in combination. Polyvinylidene difluoride (PVDF) is preferable since it can certainly provide the shut down function and excellent high rate characteristics.

There is no particular limitation regarding the manner in which the fluorine-based resin possesses a carboxyl group (-COOH) or an ester group (-COOR, wherein R is a hydrocarbon having 1 to 5 carbon atoms for example). For example, the fluorinated resin can be a copolymer of a monomer having a carboxyl group or an ester group with a monomer containing fluorine; the fluorine-based resin can be a mixture of a fluorinated resin and a resin having a carboxyl group or an ester group; or the fluorinated resin can be modified with a compound having a carboxyl group or an ester group (for example, an acrylic acid).

It is preferable that the fluorine-based resin is used in combination with other resins. There is no particular limitation regarding the formulation amount. Here, when the total amount of the resin component used in the resin layer 5 is taken as 100 parts by mass, the fluorine-based resin shall be in the range of 10 parts by mass to 99.995 parts by mass in order to minimize the increase in resistance during usual usage, and to suitably realize the PTC function by swelling with the non-aqueous electrolyte solution at elevated temperatures. When the amount exceeds 99.995 parts by mass, the swelling proceeds too far, thereby resulting in cases where the PTC function cannot be realized due to partial dissolution. On the other hand, when the amount is less than 10 parts by mass, the degree of swelling would be low, thereby resulting in cases where the PTC function cannot be realized. The formulation amount of the fluorine-based resin can be in the range of two values selected from the group consisting of 10, 20, 30, 50, 70, 90, 95, 98, 99, 99.5, 99.9, 99.99, and 99.995 parts by mass.

The weight average molecular weight of the fluorine-based resin is preferably 3 x 10⁴ or more and 100 x 10⁴ or less. When the weight average molecular weight is less than 3 x 10⁴, there are cases where the PTC exhibiting temperature drops and the degree of swelling decreases. The drop in the PTC exhibiting temperature would realize the PTC function in the temperature range of the usual usage, and thus can be undesirable. In addition, the decrease in the degree of swelling can largely impair the PTC function, which is undesirable. When the weight average molecular weight exceeds 100 x 10⁴, the PTC exhibiting temperature rises and the degree of swelling increases. When the PTC exhibiting temperature rises, the temperature at which the decomposition into the electrolyte solution occurs and the PTC function is exhibited would be in the same temperature range, and thus there are cases where the PTC function cannot be realized. In addition, when the degree of swelling increases so as to reach the condition of dissolution, partial conduction would largely impair the PTC function, which is undesirable. Specific examples of the weight average molecular weight are 3 x 10⁴, 4 x 10⁴, 5 x 10⁴, 6 x 10⁴, 7 x 10⁴, 8 x 10⁴, 9 x 10⁴, 10 x 10⁴, 15 x 10⁴, 20 x 10⁴, 30 x 10⁴, 40 x 10⁴, 50 x 10⁴, 60 x 10⁴, 70 x 10⁴, 80 x 10⁴, 90 x 10⁴, and 100 x 10⁴. The weight average molecular weight can be in the range of two values selected from the values exemplified above. Here, the weight average molecular weight can be measured by GPC (gel permeation chromatography) using the resin solution before addition of the conductive material.

### (3-1-2. Polyether-based Compound)

The polyether-based compound used in the present embodiment is a compound having a polyether portion. For example, polyethylene glycol, polypropylene glycol, polybutylene glycol, polyethylene oxide, polyethylene glycol gryceryl ether, polypropylene gryceryl ether, polypropylene digryceryl ether, polypropylene sorbitol ether, polyethylene glycol-polypropylene glycol block copolymer, polyoxytetramethylene-polyoxyethylene glycol random copolymer, polytetramethylene glycol, polyoxytetramethylene-polyoxypropylene glycol random copolymer, and the like can be mentioned. In addition, these polyether-based compounds can be modified with carboxyl groups of sorbitan, oleic acid, lauryl acid, palmitic acid, stearic acid, and the like; with alkyl ether modified derivatives; with derivatives with fatty acid esters or glycerin esters; and with copolymers thereof.

It is preferable that the polyether-based compound is used in combination with other resin. Taking the total amount of the resin component used for the resin layer 5 as 100 parts by mass, when the polyether-based compound is formulated by 100 parts by mass, the adhesion of the resin layer 5 with the substrate 3 can be insufficient. This would easily bring rise in the resistance during usual usage of the battery, and thus the usual usage may become difficult. There is no particular limitation regarding the formulation amount. Here, when the polyether-based compound is formulated by 0.005 parts by mass to 90 parts by mass, the increase in the resistance during usual usage can be suppressed to minimum. Accordingly, the PTC function can be suitably realized at elevated temperatures by the swelling with the non-aqueous electrolyte solution. When the formulation amount exceeds 90 parts by mass, the swelling proceeds too far, thereby resulting in cases where the PTC function cannot be realized due to partial dissolution. On the other hand, when the formulation amount is less than 0.005 parts by mass, the degree of swelling would be low, thereby resulting in cases where the PTC function cannot be realized. The formulation amount of the polyether-based compound can be in the range of two values selected from the group consisting of 0.005, 0.01, 0.1, 0.5, 1, 2, 5, 10, 20, 30, 50, 70, and 90 parts by mass.

The weight average molecular weight of the polyether-based compound is preferably 200 or more and 200 x 10⁴ or less. When the weight average molecular weight is less than 200, there are cases where the PTC exhibiting temperature drops and the degree of swelling decreases. The drop in the PTC exhibiting temperature would realize the PTC function in the temperature range of the usual usage, and thus may be undesirable. In addition, the decrease in the degree of swelling would largely impair the PTC function, which is undesirable. When the weight average molecular weight exceeds 200 x 10⁴, the PTC exhibiting temperature rises and the degree of swelling increases. When the PTC exhibiting temperature rises, the temperature at which the decomposition into the electrolyte solution occurs and the PTC function is exhibited would be in the same temperature range, and thus there are cases where the PTC function cannot be realized. In addition, when the degree of swelling increases so as to reach the condition of dissolution, partial conduction would largely impair the PTC function, which is undesirable. Further, the adhesion between the substrate and the resin layer would decrease under usual usage, and thus the resistance easily rises during the usual usage of the battery. In a case where the initial resistance is high, the high rate characteristics decreases, and the magnification of the resistance increase would not be large when the PTC function is realized. Accordingly, it is not suitable in terms of the PTC characteristics. The weight average molecular weight can be measured by GPC (gel permeation chromatography) using the resin solution before addition of the conductive material.

### (3-1-3. Acryl-based Resin)

The acryl-based resin used in the present embodiment is a resin formed from a monomer having acrylic acid or methacrylic acid, or derivatives thereof as a main component. The ratio of the acrylic component in the monomer for the acryl-based resin is, for example, 50 parts by mass or more, preferably 80 parts by mass or more. There is no particular upper limit, and the monomer of the acryl-based resin can be substantially composed only of the acrylic component. In addition, the monomer of the acryl-based resin can contain one type of the acrylic component or can contain two or more types of the acrylic components.

Among the acryl-based resins, the acrylic copolymer containing at least one selected from the group consisting of a methacrylic acid, derivatives thereof, and a polar group containing acryl-based compound as a monomer, is preferable. When the acrylic copolymer containing such monomer is used, the high rate characteristics can be further improved. As the methacrylic acid or derivatives thereof, methacrylic acid, methyl methacrylate, ethyl methacrylate, isopropyl methacrylate and the like can be mentioned for example. As the polar group containing acryl-based compound, acrylonitrile, methacrylonitrile, acrylamide, methacrylamide and the like can be mentioned for example. In addition, among the polar group containing acryl-based compounds, the acrylic compound having an amide group is preferable. As the acrylic compound having the amide group, acrylamide, N-methylol acrylamide, diacetone acrylamide and the like can be mentioned for example.

It is preferable that the acryl-based resin is used in combination with other resin. Taking the total amount of the resin component used for the resin layer 5 as 100 parts by mass, when the acryl-based resin is formulated by 100 parts by mass, the adhesion of the resin layer 5 with the substrate 3 can be insufficient. This would easily bring rise in the resistance during usual usage of the battery. There is no particular limitation regarding the formulation amount. Here, when the acryl-based resin is formulated by 0.005 parts by mass to 90 parts by mass, the increase in the resistance during usual usage can be suppressed to minimum. Accordingly, the PTC function can be suitably realized at elevated temperatures by the swelling with the non-aqueous electrolyte solution. When the formulation amount exceeds 90 parts by mass, the swelling proceeds too far, thereby resulting in cases where the PTC function cannot be realized due to partial dissolution. On the other hand, when the formulation amount is less than 0.005 parts by mass, the degree of swelling would be low, thereby resulting in cases where the PTC function cannot be realized. The formulation amount of the acryl-based resin can be in the range of two values selected from the group consisting of 0.005, 0.01, 0.1, 0.5, 1, 2, 5, 10, 20, 30, 50, 70, and 90 parts by mass.

The weight average molecular weight of the acryl-based resin is preferably 3 x 10⁴ or more and 100 x 10⁴ or less. When the weight average molecular weight is less than 3 x 10⁴, there are cases where the PTC realization temperature drops and the degree of swelling decreases. The drop in the PTC exhibiting temperature would realize the PTC function in the temperature range of the usual usage, and thus can be undesirable. In addition, the decrease in the degree of swelling can largely impair the PTC function, which is undesirable. When the weight average molecular weight exceeds 100 x 10⁴, the PTC exhibiting temperature rises and the degree of swelling increases. When the PTC exhibiting temperature rises, the temperature at which the decomposition into the electrolyte solution occurs and the PTC function is exhibited would be in the same temperature range, and thus there are cases where the PTC function cannot be realized. In addition, when the degree of swelling increases so as to reach the condition of dissolution, partial conduction would largely impair the PTC function, which is undesirable. Further, the adhesion between the substrate and the resin layer would decrease under usual usage, and thus the resistance easily rises during the usual usage of the battery. In a case where the initial resistance is high, the high rate characteristics decreases, and the magnification of the resistance increase would not be large when the PTC function is realized. Accordingly, it is not suitable in terms of the PTC characteristics. The weight average molecular weight can be measured by GPC (gel permeation chromatography) using the resin solution before addition of the conductive material.

### (3-1-4. Cellulose-based Resin)

The cellulose-based resin used in the present embodiment is the one containing a resin having a polysaccharide structure. For example, natural pulp, natural crystalline cellulose, methylcellulose, hydroxypropyl methylcellulose, ethylcellulose, carboxymethyl cellulose, ethyl hydroxyethyl cellulose, nitrocellulose, cellulose acetate, cellulose acetate butyrate, cellulose acetate propionate, chitin, chitosan, glycerylated chitosan and the like can be mentioned.

It is preferable that the cellulose-based resin is used in combination with other resin. Taking the total amount of the resin component used for the resin layer 5 as 100 parts by mass, when the cellulose-based resin is formulated by 100 parts by mass, the adhesion of the resin layer 5 with the substrate 3 can be insufficient. This would easily bring rise in the resistance during usual usage of the battery. There is no particular limitation regarding the formulation amount. Here, when the cellullose-based resin is formulated by 0.005 parts by mass to 90 parts by mass, the increase in the resistance during usual usage can be suppressed to minimum. Accordingly, the PTC function can be suitably realized at elevated temperatures by the swelling with the non-aqueous electrolyte solution. When the formulation amount exceeds 90 parts by mass, the swelling proceeds too far, thereby resulting in cases where the PTC function cannot be realized due to partial dissolution. On the other hand, when the formulation amount is less than 0.005 parts by mass, the degree of swelling would be low, thereby resulting in cases where the PTC function cannot be realized. The formulation amount of the cellulose-based resin can be in the range of two values selected from the group consisting of 0.005, 0.01, 0.1, 0.5, 1, 2, 5, 10, 20, 30, 50, 70, and 90 parts by mass.

The weight average molecular weight of the cellulose-based resin is preferably 1 x 10⁴ or more and 100 x 10⁴ or less. When the weight average molecular weight is less than 1 x 10⁴, there are cases where the PTC exhibiting temperature drops and the degree of swelling decreases. The drop in the PTC exhibiting temperature would realize the PTC function in the temperature range of the usual usage, and thus can be undesirable. In addition, the decrease in the degree of swelling can largely impair the PTC function, which is undesirable. When the weight average molecular weight exceeds 100 x 10⁴, the PTC exhibiting temperature rises and the degree of swelling increases. When the PTC realization temperature rises, the temperature at which the decomposition into the electrolyte solution occurs and the PTC function is exhibited would be in the same temperature range, and thus there are cases where the PTC function cannot be realized. In addition, when the degree of swelling increases so as to reach the condition of dissolution, partial conduction would largely impair the PTC function, which is undesirable. Further, the adhesion between the substrate and the resin layer would decrease under usual usage, and thus the resistance easily rises during the usual usage of the battery. In a case where the initial resistance is high, the high rate characteristics decreases, and the magnification of the resistance increase would not be large when the PTC function is realized. Accordingly, it is not suitable in terms of the PTC characteristics. The weight average molecular weight can be measured by GPC (gel permeation chromatography) using the resin solution before addition of the conductive material.

### (3-1-5. Poval-based Resin)

When the poval-based resin is used as the binder for the resin layer, it is preferable that the saponification degree of the poval-based resin is 50% or higher and 100% or lower. When the saponification degree is 50% or higher, the swelling would proceed in accordance with the increase in temperature, and thus it is favorable for the PTC function. The saponification degree should be 50% or higher and 100% or lower, and can be in the range of two values selected from the group consisting of 50, 60, 70, 80, 90, and 100%.

In addition, a resin having its poval portion partially modified can be used. As an example of such modification, formal poval and butylated poval can be used.

It is preferable that the poval-based resin is used in combination with other resin. Taking the total amount of the resin component used for the resin layer 5 as 100 parts by mass, when the poval-based resin is formulated by 100 parts by mass, the adhesion of the resin layer 5 with the substrate 3 can be insufficient. This would easily bring rise in the resistance during usual usage of the battery. There is no particular limitation regarding the formulation amount. Here, when the poval-based resin is formulated by 0.005 parts by mass to 90 parts by mass, the increase in the resistance during usual usage can be suppressed to minimum. Accordingly, the PTC function can be suitably realized at elevated temperatures by the swelling with the non-aqueous electrolyte solution. When the formulation amount exceeds 90 parts by mass, the swelling proceeds too far, thereby resulting in cases where the PTC function cannot be realized due to partial dissolution. On the other hand, when the formulation amount is less than 0.005 parts by mass, the degree of swelling would be low, thereby resulting in cases where the PTC function cannot be realized. The formulation amount of the poval-based resin can be in the range of two values selected from the group consisting of 0.005, 0.01, 0.1, 0.5, 1, 2, 5, 10, 20, 30, 50, 70, and 90 parts by mass.

The weight average molecular weight of the poval-based resin is preferably 1 x 10⁴ or more and 50 x 10⁴ or less. When the weight average molecular weight is less than 1 x 10⁴, there are cases where the PTC exhibiting temperature drops and the degree of swelling decreases. The drop in the PTC exhibiting temperature would realize the PTC function in the temperature range of the usual usage, and thus may be undesirable. In addition, the decrease in the degree of swelling would largely impair the PTC function, which is undesirable. When the weight average molecular weight exceeds 50 x 10⁴, the PTC exhibiting temperature rises and the degree of swelling increases. When the PTC realization temperature rises, the temperature at which the decomposition into the electrolyte solution occurs and the PTC function is exhibited would be in the same temperature range, and thus there are cases where the PTC function cannot be realized. In addition, when the degree of swelling increases so as to reach the condition of dissolution, partial conduction would largely impair the PTC function, which is undesirable. Further, the resistance easily rises during the usual usage of the battery. In a case where the initial resistance is high, the high rate characteristics decreases, and the magnification of the resistance increase would not be large when the PTC function is realized. Accordingly, it is not suitable in terms of the PTC characteristics. The weight average molecular weight can be measured by GPC (gel permeation chromatography) using the resin solution before addition of the conductive material.

### (3-2. Other Resin)

The resin of the resin layer 5 of the present embodiment can use 100 parts by mass of one type of resin selected from the group consisting of a fluorine-based resin, an acryl-based resin, a cellulose-based resin, and a poval-based resin; when the entire resin component is taken as 100 parts by mass. Otherwise, the resin of the resin layer 5 can be used in combination with other resin.

There is no particular limitation regarding the resin or the compound which can be used in combination. Here, a non-swelling resin, which is capable of adjusting the swelling degree of the resin layer 5 by its formulation amount and has good adhesion property with the substrate 3, is preferable. As an example, an epoxy-based resin, a polyolefin-based resin, a melamine-based resin, a polyester-based resin and the like can be used.

It is preferable that the non-swelling resin is used in combination with the afore-mentioned swelling resin. Taking the total amount of the resin component used for the resin layer 5 as 100 parts by mass, when the non-swelling resin is 10 parts by mass to 95 parts by mass, the increase in the resistance during usual usage can be suppressed to minimum. Accordingly, the PTC function can be suitably realized at elevated temperatures by the swelling with the non-aqueous electrolyte solution. When the formulation amount exceeds 95 parts by mass, the degree of swelling would be low, thereby resulting in cases where the PTC function cannot be realized. On the other hand, when the formulation amount is less than 10 parts by mass, the swelling proceeds too far, thereby resulting in cases where the PTC function cannot be realized due to partial dissolution. The formulation amount of the non-swelling resin can be in the range of two values selected from the group consisting of 10, 20, 30, 40, 50, 60, 70, 80, 90, and 95 parts by mass.

### (4. Conductive Material)

Since the resin used for the resin layer 5 of the present embodiment alone has high insulating property, it is necessary to formulate a conductive material in order to provide electron conductivity. As the conductive material used in the present embodiment, known carbon powders, metal powders and the like can be used. Among these, carbon powders are preferable. As the carbon powders, acetylene black, Ketjen black, furnace black, carbon nanotubes, various graphite particles and the like can be used.

There is no particular limitation regarding the addition amount of the conductive material 11. Here, with respect to 100 parts by mass of the resin component of the resin layer 5, the addition amount of the conductive material 11 is preferably 10 to 100 parts by mass, more preferably 15 to 85 parts by mass, and further more preferably 20 to 75 parts by mass. When the addition amount is less than 10 parts by mass, the volume specific resistivity of the resin layer 5 becomes high, resulting in cases where the conductivity required as the current collector 1 cannot be obtained. When the addition amount exceeds 100 parts by mass, the adhesion between the conductive substrate 3 and the resin layer 5 would decrease. In such circumstances, there are cases where the expansion and contraction of the active material caused by charging and discharging of the battery would result in peeling off of the active material layer from the current collector. In order to disperse the conductive material in the resin solution, a planetary mixer, a ball mill, a homogenizer and the like can be used.

There is no particular limitation regarding the method for forming the resin layer 5 having conductivity, used in the present embodiment. Here, it is preferable to coat a solution or a dispersion containing a binder resin and the conductive material 11 onto the conductive substrate 3. As the method for coating, a roll coater, a gravure coater, a slit die coater and the like can be used. It is preferable that the resin used in the present embodiment contains at least one type selected from the group consisting of a fluorine-based resin, a polyether-based compound, an acryl-based resin, a cellulose-based resin, and a poval-based resin.

### (5. Electrode Structure)

FIG. 2 is a cross-sectional view showing a structure of an electrode structure constructed by using the current collector of the present embodiment. The electrode structure 7 of the present embodiment can be obtained by forming an active material layer 9 or an electrode material layer 9 on at least one side of the current collector 1 of the present embodiment. With respect to an electrode structure 7 for electrical storage device having formed the electrode material layer 9, the electrode structure 7 can be used in combination with a separator and a non-aqueous electrolyte solution to manufacture an electrode structure 7 (including parts of a battery) for a non-aqueous electrolyte battery such as a lithium ion secondary battery. In the electrode structure 7 of the non-aqueous electrolyte battery and the non-aqueous electrolyte battery according to the present embodiment, known parts for the non-aqueous electrolyte battery can be used for the parts other than the current collector 1.

Here, the active material layer 9 formed as the electrode structure 7 in the present embodiment can be the one suggested for the non-aqueous electrolyte battery. For example, regarding the positive electrode, LiCoO₂, LiMnO₄, LiNiO₂ and the like as the active material and carbon black such as acetylene black and the like as the conductive material 11 are dispersed in PVDF or a water dispersion type PTFE as a binder to give a paste. The paste is then coated on the current collector 1 of the present embodiment and dried to obtain the positive electrode structure of the present embodiment.

Regarding an electrode structure 7 of a negative electrode, black lead, graphite, mesocarbon microbead and the like as the active material is dispersed in CMC (carboxymethyl cellulose) as a thickening agent, followed by mixing with SBR (styrene butadiene rubber) as a binder to give a paste. The paste is then coated as the active material forming material onto the current collector 1 of the present embodiment using copper (substrate 3) and dried to obtain the negative electrode structure of the present embodiment.

### (6. Electrical Storage Device)

Electrical Storage Device (Electrical Double Layer Capacitor, Lithium Ion Capacitors and the like) In general, electrical double layer capacitors and the like are safe compared with the secondary batteries. Here, in view of improving the high rate characteristics, the current collector 1 of the present embodiment can be applied for the electrical double layer capacitors and the like. The current collector 1 of the present embodiment can be applied to electrical storage devices of electrical double layer capacitors, lithium ion capacitors and the like, which require high speed charge/discharge at a high current density. The electrode structure 7 for the electrical storage device according to the present embodiment can be obtained by forming an electrode material layer on the current collector 1 of the present embodiment. Here, the electrode structure 7 can be used together with a separator, an electrolyte solution and the like to manufacture the electrical storage device of the electrical double layer capacitors, lithium ion capacitors and the like. In the electrode structure 7 and the electrical storage device of the present embodiment, known parts for the electrical double layer capacitors and lithium ion capacitors can be used for the parts other than the current collector 1.

The electrode material layer 9 can be structured with a positive electrode, a negative electrode, an electrode material, a conductive material, and a binder. In the present embodiment, the afore-mentioned electrode material layer is formed on at least one side of the current collector 1 of the present embodiment to give the electrode structure 7, before obtaining the electrical storage device. Here, as the electrode material, the ones conventionally used as the electrode material for the electrical double layer capacitors and for the lithium ion capacitors can be used. For example, carbon powders such as activated charcoal and black lead, and carbon fibers can be used. As the binder, PVDF (polyvinylidene difluoride), SBR, water dispersion type PTFE and the like can be used for example. Here, the electrical storage device of the present embodiment can be used to structure the electrical double layer capacitors and the lithium ion capacitors by fixing a separator in between the electrode structures 7 of the present embodiment, and then immersing the separator in an electrolyte solution. As the separator, a membrane made of polyolefin having microporous, a non-woven fabric for an electrical double layer capacitor, and the like can be used for example.

As the afore-mentioned non-aqueous electrolyte, there is no particular limitation so long as there is no side reaction such as decomposition in the voltage range used as the electrical double layer capacitors or lithium ion capacitors. For example, quarternary ammonium salts such as tetraethylammonium salt, triethylmethylammonium salt, tetrabutylammonium salt and the like can be used as the positive ion; and hexafluorophosphate, tetrafluoroborate, perchlorate and the like can be used as the negative ion.

As the afore-mentioned non-aqueous solvent, aprotic solvents such as carbonates, esters, ethers, nitriles, sulfonic acids, lactones and the like can be used. For example, one type or two or more types of non-aqueous solvents selected from ethylene carbonate (EC), propylene carbonate (PC), diethyl carbonate (DEC), dimethyl carbonate (DMC), ethylmethyl carbonate (EMC), 1,2-dimethoxyethane, 1,2-diethoxyethane, tetrahydrofuran, 2-methyltetrahydrofuran, dioxane, 1,3-dioxolane, diethylene glycol dimethyl ether, ethylene glycol dimethyl ether, acetonitrile, propionitrile, nitromethane, N,N-dimethylformamide, dimethylsulfoxide, sulforane, γ-butyrolactone and the like can be used.

The embodiments of the present invention have been described with reference to the Drawings. Here, they are merely an exemplification of the present invention, and the present invention can adopt various constituents other than those mentioned above.

### EXAMPLES

Hereinafter, the present invention will be described in detail with reference to Examples. However, the present invention shall not be limited to these Examples.

### <Example 1>

As shown in Table 1, PVDF modified with acrylic acid (weight average molecular weight of 50000, 97 parts by mass, hereinafter weight of the resin being a weight without a wetting agent) as the fluorine-based resin and polyethylene oxide (weight average molecular weight of 10000, 3 parts by mass) as the polyether-based compound were mixed to give a resin solution. Subsequently, acetylene black was added by 30 parts by mass with respect to the resin component (solids of the resin, hereinafter the same applied). The resulting mixture was dispersed using a ball mill for 8 hours, thereby obtaining a coating. The coating was coated on one side of an aluminum foil (JIS A1085) having a thickness of 15µm using a gravure coater so that the coating would have a thickness of 2µm. Subsequently, the coating was subjected to baking for 24 seconds with a peak metal temperature (PMT) of 110°C. Accordingly, a current collector electrode was prepared. Hereinafter, the substrate, coating, and the conditions of drying are the same, and thus their descriptions are omitted.

### <Examples 2 to 31>

PVDF (modified with acrylic acid as in Example 1) as the fluorine-based resin having a molecular weight shown in Table 1, polyethylene glycol (PEG) and polypropylene glycol (PPG) as the polyether-based compound, copolymer of methyl acrylate and methacrylic acid (methyl acrylate : methacrylic acid = 95:5) as the acryl-based resin, cellulose acetate propionate as the cellulose-based resin, poval-based resin (saponification degree of 70%), and bisphenol-A type epoxy resin as the epoxy-based resin were formulated by the parts by mass as shown in Table 1. The current collector electrodes were prepared in a similar manner as Example 1.

### (Comparative Examples 1 to 6)

PVDF (not acrylic acid modified) as the fluorine-based resin having a molecular weight shown in Table 1, polyethylene oxide (PEO) as the polyether-based compound, copolymer of methyl acrylate and methacrylic acid (methyl acrylate : methacrylic acid = 95:5) as the acryl-based resin, cellulose acetate propionate as the cellulose-based resin, bisphenol-A type epoxy resin as the epoxy-based resin, and methylol melamine as the melamine were formulated by the parts by mass as shown in Table 1. The current collector electrodes were prepared in a similar manner as Example 1.

Here, the non-aqueous electrolyte solution used in either one of the Examples and the Comparative Examples is described in the following PTC function measuring method.

**[Table 1]**

| | resin 1 | | | resin 2 | | | non-aqueous electrolyte solution | PTC exhibiting temperature (°C) | degree of swelling (% at PTC exhibiting temperature) | magnification of resistance (times at PTC exhibiting temperature+ 20°C) | discharge rate characteristics | result of overcharge test (condition of battery) |
|---|---|---|---|---|---|---|---|---|---|---|---|---|
| | resin | weight average molecular weight | addition amount (parts by weight) | resin | weight average molecular weight | addition amount (parts by weight) | | | | | | |
| Example 1 | PVDF | 50000 | 97 | PEO | 100000 | 3 | EC,DEC | 90 | 40 | 3.5 | A | no change |
| Example 2 | PVDF | 250000 | 97 | PEO | 100000 | 3 | EC,DEC | 100 | 60 | 5.7 | A | no change |
| Example 3 | PVDF | 800000 | 97 | PEO | 100000 | 3 | EC,DEC | 110 | 80 | 10.1 | A | no change |
| Example 4 | PVDF | 250000 | 90 | PEO | 20000 | 10 | EC,DEC | 80 | 20 | 2.7 | A | no change |
| Example 5 | PVDF | 250000 | 90 | PEO | 200000 | 10 | EC,DEC | 105 | 50 | 10.5 | A | no change |
| Example 6 | PVDF | 250000 | 90 | PEO | 2000000 | 10 | EC,DEC | 120 | 75 | 15.5 | A | no change |
| Example 7 | PVDF | 250000 | 99.995 | PEO | 100000 | 0.005 | EC,DEC | 100 | 10 | 2.8 | A | no change |
| Example 8 | PVDF | 250000 | 80 | PEO | 100000 | 20 | EC,DEC | 100 | 40 | 3.3 | A | no change |
| Example 9 | PVDF | 250000 | 10 | PEO | 100000 | 90 | EC,DEC | 100 | 980 | 2.5 | A | no change |
| Example 10 | PVDF | 250000 | 98 | PEG | 500 | 2 | EC,DEC | 65 | 30 | 3.2 | A | no change |
| Example 11 | PVDF | 250000 | 98 | PEG | 2000 | 2 | EC,DEC | 90 | 50 | 3.7 | A | no change |
| Example 12 | PVDF | 250000 | 98 | PEG | 20000 | 2 | EC,DEC | 100 | 60 | 4.1 | A | no change |
| Example 13 | PVDF | 250000 | 99.8 | PPG | 2000 | 0.2 | EC,DEC | 85 | 20 | 3.1 | A | no change |
| Example 14 | PVDF | 250000 | 99.8 | PPG | 10000 | 0.2 | EC,DEC | 100 | 30 | 3.3 | A | no change |
| Example 15 | PVDF | 250000 | 99.8 | PPG | 80000 | 0.2 | EC,DEC | 110 | 40 | 3.5 | A | no change |
| Example 16 | PVDF | 250000 | 70 | acryl | 70000 | 30 | EC,DEC | 130 | 180 | 5.1 | A | no change |
| Example 17 | PVDF | 250000 | 70 | cellulose | 100000 | 30 | EC,DEC | 140 | 300 | 5.7 | A | no change |
| Example 18 | PVDF | 250000 | 70 | poval | 40000 | 30 | EC,DEC | 150 | 800 | 5.4 | A | no change |
| Example 19 | epoxy | 80000 | 95 | PEO | 60000 | 5 | EC,DEC | 100 | 1.2 | 2.1 | A | no change |
| Example 20 | epoxy | 80000 | 80 | PEO | 60000 | 20 | EC,DEC | 100 | 160 | 6.1 | A | no change |
| Example 21 | epoxy | 80000 | 80 | PEG | 20000 | 20 | EC,DEC | 90 | 240 | 8.9 | A | no change |
| Example 22 | epoxy | 80000 | 80 | PPG | 10000 | 20 | EC,DEC | 110 | 300 | 9.3 | A | no change |
| Example 23 | epoxy | 80000 | 70 | acryl | 30000 | 30 | PC | 180 | 60 | 7.3 | A | no change |
| Example 24 | epoxy | 80000 | 70 | acryl | 70000 | 30 | PC | 185 | 80 | 10.1 | A | no change |
| Example 25 | epoxy | 80000 | 70 | acryl | 200000 | 30 | PC | 200 | 150 | 14.4 | A | no change |
| Example 26 | epoxy | 80000 | 60 | cellulose | 15000 | 40 | PC | 135 | 400 | 3.4 | A | no change |
| Example 27 | epoxy | 80000 | 60 | cellulose | 100000 | 40 | PC | 145 | 550 | 5.5 | A | no change |
| Example 28 | epoxy | 80000 | 60 | cellulose | 800000 | 40 | PC | 150 | 620 | 2.1 | A | no change |
| Example 29 | epoxy | 80000 | 70 | poval | 20000 | 30 | PC | 135 | 700 | 4.6 | A | no change |
| Example 30 | epoxy | 80000 | 70 | poval | 100000 | 30 | PC | 140 | 820 | 4.4 | A | no change |
| Example 31 | epoxy | 80000 | 70 | poval | 450000 | 30 | PC | 145 | 900 | 2.8 | A | no change |
| Comparative Example 1 | epoxy | 80000 | 60 | melamine | 500 | 40 | EC,DEC | none | 0.1 | 0.9 | A | fuming |
| Comparative Example 2 | epoxy | 80000 | 99.999 | PEO | 60000 | 0.001 | EC,DEC | 100 | 0.5 | 1.4 | A | fuming |
| Comparative Example 3 | epoxy | 80000 | 5 | PEO | 60000 | 95 | EC,DEC | 100 | 1100 | 1.3 | B | fuming |
| Comparative Example 4 | PVDF | 20000 | 50 | PEG | 500 | 50 | EC,DEC | 60 | 110 | 7.7 | B | no change |
| Comparative Example 5 | epoxy | 80000 | 50 | acryl | 700000 | 50 | PC | 220 | 200 | 5.9 | A | fuming |
| Comparative Example 6 | epoxy | 80000 | 70 | acryl | 70000 | 30 | ethanol | none | 0.3 | 1 | A | fuming |

### <PTC Function Measuring Method>

The current collectors thus obtained were cut out in a shape having a rectangular portion of 4cm x 5cm and an extended portion (a terminal portion) having a 5mm width from one end of the longitudinal side of the rectangular portion. The resin layer was removed from the terminal portion to expose the surface of the current collector, thereby preparing the test piece. Two test pieces were cut out from each of the positive electrode samples, and were allowed to come in contact with each other facially so that the measurement region would overlap (overlapping area being 20 cm²) and one of the terminal portions would be arranged at one end side of the longitudinal side of the measurement region and the other terminal portion would be arranged at the other end side of the longitudinal side of the measurement region. The contacting two test pieces and the non-aqueous electrolyte solution were inserted in between two laminate films and were sealed. Here, the terminal portions were placed outside the laminate films. As the non-aqueous electrolyte solution, the ones prepared by formulating LiPF₆ by a concentration of 1.0M in a solvent mixture of EC and DEC (volume ratio of 1:1) were used in Examples 1 to 22 and Comparative Examples 1 to 4. In Examples 23 to 31 and Comparative Example 5, the ones prepared by formulating triethylammonium tetrafluoroborate by a concentration of 1.5M in PC solvent were used. In Comparative Example 6, the one prepared by formulating lithium perchlorate by a concentration of 1.0M in ethanol solvent was used. The terminal portions were connected to alternating current, and the sealed measurement region was held with a light force (pressure of approximately 25 N/cm²) in between two plate jigs and was placed in a thermostat chamber. Change in the resistance was observed while an alternating current of 1 kHz was applied and heat with a programming rate of 5°C/min was applied.

### <PTC Exhibiting Temperature>

In the afore-mentioned measurement of the PTC function, temperature Ta at which a relational expression of (R_{(T)}/R_{(T-10)})>1.5 is satisfied for the resistance R_{T} at temperature T and the resistance R_{(T-10)} at temperature T-10°C, and temperature Tb at which a relational expression of (R_{(T)}/R_{(T-10)})<1.5 is satisfied at a temperature above Ta, were defined. Then, a straight line was obtained with the values of resistance in the range from R_{Ta} at Ta to R_{(Tb-10)} at 10°C lower than Tb using the least squares method, and another straight line was obtained with the values of resistance in the range from 25°C to 40°C using the least squares method. The point where the two straight lines cross was defined as the PTC exhibiting temperature.

### <Resin Swelling Degree Measuring Method>

The current collector having the resin layer formed thereon was immersed in the non-aqueous electrolyte solution at 25°C or at the PTC exhibiting temperature for 1 hour, and was then taken out to weigh its weight. The increase in weight was calculated from the weight at the PTC exhibiting temperature with respect to the weight of the resin layer at 25°C, and was taken as the resin swelling degree.

### <Discharge Rate Characteristics>

### (1) Preparation of Battery

### (Positive Electrode)

The current collector prepared by the afore-mentioned method having a resin layer thereon was coated with an active material paste (LiMn₂O₄/AB/PVDF = 89.5/5/5.5, NMP (N-methyl-2-pyrrolidone) solvent) and was dried. The current collector was then pressed to form an active material layer having a thickness of 60µm.

### (Negative Electrode)

A copper foil having a thickness of 10µm was coated with an active material paste (MCMB (mesocarbon microbead)/AB/PVDF = 93/2/5, NMP solvent) and was dried. The current collector was then pressed to form an active material layer having a thickness of 40µm.

### (Preparation of Cylindrical Type Lithium Ion Battery (Φ18 mm x 65 mm length in axial direction))

The positive electrode, negative electrode, electrolyte solution (1M LiPF₆, EC (ethylene carbonate)/MEC (methyl ethyl carbonate) = 3/7), and a separator (25µm thickness, micropore polyethylene film) were wound, followed by welding of leads to each of the battery poles. Then, the battery was cased.

### (2) Measurement of Capacity Retention Rate (Discharge Rate Characteristics)

The battery thus obtained was charged to 4.2V at 0.25 mA/cm² by constant current and constant voltage. Then, the battery was discharged by constant current at 0.25 mA/cm² and 5 mA/cm². Capacity retention rate was calculated from each of the discharge capacity by the following equation of "Capacity retention rate = (discharge capacity at 5 mA/cm²)/(discharge capacity at 0.25 mA/cm²)". If the capacity retention rate is 0.8 or higher, usage under high rate is possible. In Table 1, "A" means that the capacity retention rate is 0.8 or higher, and "B" means that the capacity retention rate is lower than 0.8.

### <Overcharge Test>

The afore-mentioned battery was charged to 4.2V at 1.5 mA/cm² by constant current and constant voltage. Then, the fully charged battery was further charged up to 250% at 5A. The conditions of the battery such as whether fuming occurred or not were investigated.

<Discussion of Results>

Examples 1 to 31 showed no abnormality even when overcharged. This indicates that the heat generated by overcharge resulted in sufficient increase in the resistance of the resin layer, thereby decreasing the current to a safe level. In addition, Examples 1 to 31 had high capacity retention rate, and can be sufficiently used at high rate. On the other hand, Comparative Example 1, Comparative Example 2, Comparative Example 3, Comparative Example 5 and Comparative Example 6 suffered fuming from the batteries. It is assumed that the resistance of the resin layer did not decrease sufficiently with Comparative Examples 1, 2, and 3 even when heat was generated by overcharge, thereby leading to decomposition of the electrolyte solution and fuming. In Comparative Example 5, the PTC function exhibiting temperature was high. Therefore, the resistance of the current collector was raised, however, decomposition of the electrolyte solution occurred in the same temperature region, thereby resulting in fuming. In Comparative Example 4, the PTC function exhibiting temperature was low, falling in the usual usage temperature range. Accordingly, it cannot be applied for HEV and the like which require high rate characteristics. In Comparative Example 5, the capacity retention rate was lower than 0.8, and thus it cannot be applied for HEV and the like which require high rate characteristics. In Comparative Example 6, the resin layer does not swell with the protic solvent, and thus the PTC function cannot be realized, resulting in fuming.

The present invention has been explained with reference to Examples. These Examples are provided merely as an exemplification, and it should be understood by the person having ordinary skill in the art that various modification can be made, and such modified examples are in the scope of the present invention.

### EXPLANATION OF SYMBOLS

- 1:: current collector
- 3:: conductive substrate
- 5:: resin layer (resin layer for current collector)
- 7:: electrode structure
- 9:: active material layer or electrode material layer

## Claims

1. A current collector, comprising:
a substrate; and
a resin layer formed on at least one side of the substrate, the resin layer having conductivity; wherein
the resin layer comprises a resin and a conductive material; and
the resin layer satisfies the following conditions of:
(1) a degree of swelling of the resin layer with a non-aqueous electrolyte solution is 1% or more and 1000% or less at a PTC exhibiting temperature, and
(2) the PTC exhibiting temperature is in the range of 65°C to 200°C; when
the current collector is immersed in the non-aqueous electrolyte solution and the temperature is raised with a speed of 5°C/min to obtain a temperature-resistance curve of the current collector;
temperature Ta is defined as a temperature at which resistance R_{T} at temperature T and resistance R_{(T-10)} at temperature T-10°C satisfies a relation of (R_{(T)}/R_{(T-10)}) >1.5;
temperature Tb is defined as a temperature above Ta which first satisfies a relation of (R_{(T)}/R_{(T-10)})<1.5;
a straight line is obtained with values of resistance in a range from R_{Ta} at Ta and R_{(Tb-10)} at 10°C lower than Tb using a least squares method, and another straight line is obtained with values of resistance in a range from 25°C to 40°C using a least squares method; and
a point where the two straight lines cross is defined as the PTC exhibiting temperature.

2. The current collector of Claim 1, wherein a resistance of a resin forming the resin layer swelled with the non-aqueous electrolyte solution at a temperature 20°C higher than the PTC exhibiting temperature is 2 times or more of a resistance at the PTC exhibiting temperature.

3. The current collector of Claim 1 or 2, wherein the resin layer comprises at least one type of resin selected from the group consisting of a fluorine-based resin, a polyether-based compound, an acryl-based resin, a cellulose-based resin, and a poval-based resin.

4. The current collector of Claim 3, wherein:
a molecular weight of the fluorine-based resin is 30,000 to 1,000,000;
a molecular weight of the polyether-based compound is 200 to 2,000,000;
a molecular weight of the acryl-based resin is 30,000 to 1,000,000;
a molecular weight of the cellulose-based resin is 10,000 to 1,000,000; and
a molecular weight of the poval-based resin is 10,000 to 500,000.

5. The current collector of any one of Claims 1 to 4, wherein the resin layer comprises an acryl modified fluorine-based resin.

6. The current collector of any one of Claims 1 to 5, wherein the resin layer comprises:
(A) 10 to 99.995 parts by mass of a polyvinylidene difluoride; and
(B) 0.005 to 90 parts by mass of at least one type selected from the group consisting of a polyether-based compound, an acryl-based resin, a cellulose-based resin, and a poval-based resin; wherein
a sum of (A) and (B) is 100 parts by mass.

7. The current collector of any one of Claims 1 to 6, wherein the resin layer comprises:
(C) 10 to 95 parts by mass of an epoxy-based resin; and
(D) 5 to 90 parts by mass of at least one type selected from the group consisting of a polyether-based compound, an acryl-based resin, a cellulose-based resin, and a poval-based resin; wherein
a sum of (C) and (D) is 100 parts by mass.

8. An electrode structure, comprising:
the current collector of any one of Claims 1 to 7; and
an active material layer or an electrode material layer formed on the resin layer of the current collector.

9. An electrical storage device comprising the electrode structure of Claim 8.

10. The electrical storage device of Claim 9, wherein the electrical storage device comprises at least one type selected from the group consisting of a non-aqueous electrolyte battery, an electrical double layer capacitor, and a lithium ion capacitor.
